# EUROPÄISCHE PATENTSCHRIFT

(11) **EP 3 024 767 B1**
(45) Veröffentlichungstag und Bekanntmachung des Hinweises auf die Patenterteilung: **08.01.2020**
(21) Anmeldenummer: 14741636.6
(22) Anmeldetag: 22.07.2014
(51) Int. Cl.: B65H 31/32, B65H 31/10

(54) **VERFAHREN ZUR HERSTELLUNG VON GROSSSTAPELN AUS GROSSSFORMATIGEN BÖGEN**
METHOD FOR PRODUCING LARGE STACKS OF LARGE FORMAT SHEETS
PROCÉDÉ POUR LA PRODUCTION DE PILES GRANDES DE FEUILLES GRAND FORMAT

(30) Priorität: 23.07.2013 DE 102013214338
(43) Veröffentlichungstag der Anmeldung: 01.06.2016
(73) Patentinhaber: BW Papersystems Stuttgart GmbH, 72622 Nürtingen (DE)
(72) Erfinder: KLEIN, Hansjörg, 73773 Aichwald (DE)
(74) Vertreter: Schleitzer, Dirk-Karsten
(86) Internationale Anmeldenummer: PCT/EP2014/065721
(87) Internationale Veröffentlichungsnummer: WO 2015/011138

(56) Entgegenhaltungen:
- DE-A1- 3 028 865
- ES-A1- 2 113 240

## Beschreibung

Die Erfindung betrifft ein Verfahren zur Herstellung von Großstapeln aus großformatigen Bögen, wobei zur Überbrückung eines vertikalen Abstands zwischen einer Zuförderebene der Bögen und einer Flurebene eine Ablageplattform als ein vertikal auf- und abfahrbarer Stapelaufnahmetisch ausgeführt ist, wobei auf dem Stapelaufnahmetisch eine herkömmliche Palette platziert wird, auf welcher die Bögen zu Stapeln abgelegt werden, wobei der Aufnahmetisch mittels Hubeinrichtung in eine obere Endposition gefahren wird und die Bögen der Palette kontinuierlich zugeführt werden, wobei während der kontinuierlichen Zuführung der Stapelaufnahmetisch mit der Palette kontinuierlich abgesenkt wird, um eine gleichmäßige Stapelbildung zu gewährleisten, wobei dann, wenn die gewünschte Stapelhöhe erreicht ist, die Stapelwechselvorrichtung zwischen zwei Bögen fährt und diese vollständig voneinander trennt, wobei der nachfolgende Stapel auf der Oberseite des als Einschubboden ausgebildeten Stapelaufnahmetisches gebildet wird, wobei der Einschubboden kontinuierlich abgesenkt wird, während der Aufnahmetisch in seine untere Endposition auf Höhe des Flurbereichs fährt und die Palette mit dem gebildeten Stapel wegtransportiert wird, wobei anschließend der Stapelaufnahmetisch mit einer neuen, leeren herkömmlichen Palette auf die Höhe der Stapelwechselvorrichtung bewegt wird und die Stapelwechselvorrichtung horizontal wieder in ihre Ausgangsposition zurück fährt und dadurch den sich bildenden Stapel auf die leere Palette ab lädt, wobei danach die Palette bzw. der Stapelaufnahmetisch erneut kontinuierlich abgesenkt wird, bis die gewünschte Stapelhöhe erreicht ist und die Stapelwechselvorrichtung wieder zwischen zwei Bögen fährt, um die Stapel zu separieren, gemäß den Merkmalen des Oberbegriffes des Patentanspruches 1.

Die Erfindung, deren Gegenstand allein durch die angehängten Patentansprüche definiert ist, betrifft somit teilweise eine Vorrichtung und ein Verfahren zum Stapeln von Bögen, insbesondere von geschuppt zugeförderten Papier- oder Kartonbögen auf Paletten, mit einem mittels Hubeinrichtung bewegbaren Stapelaufnahmetisch und einer Stapelwechselvorrichtung zur Unterteilung der zugeförderten Bögen in Stapel.

Bei der gattungsgemäßen Herstellung von Großstapeln aus großformatigen Bögen, beispielsweise DIN-Format B1 oder B2, ist zur Überbrückung des vertikalen Abstands zwischen der Zuförderebene der Bögen und der Flurebene die Ablageplattform als ein vertikal auf- und abfahrbarer Stapelaufnahmetisch ausgeführt. Auf dem Stapelaufnahmetisch wird eine Palette platziert, auf welcher die Bögen zu Stapeln abgelegt werden. Der Aufnahmetisch wird mittels Hubeinrichtung in die obere Endposition gefahren und die Bögen werden der Palette kontinuierlich zugeführt. Während der kontinuierlichen Zuführung wird der Stapelaufnahmetisch mit der Palette kontinuierlich abgesenkt, um eine gleichmäßige Stapelbildung zu gewährleisten. Ist die gewünschte Stapelhöhe erreicht, fährt die Stapelwechselvorrichtung, beispielsweise ausgebildet als horizontal bewegbarer Einschubboden, zwischen zwei Bögen und trennt diese vollständig voneinander. Der Untere dieser zwei Bögen bildet somit den obersten Bogen des auf der Palette abgestapelten Stapels, der obere der zwei getrennten Bögen ist der erste Bogen des nachfolgenden Stapels. Der nachfolgende Stapel wird auf der Oberseite des Einschubbodens gebildet. Um eine gleichmäßige Stapelbildung zu gewährleisten, wird auch der Einschubboden kontinuierlich abgesenkt. Währenddessen fährt der Aufnahmetisch in seine untere Endposition auf Höhe des Flurbereichs und die Palette mit dem gebildeten Stapel wird wegtransportiert. Anschließend wird der Stapelaufnahmetisch mit einer neuen, leeren Palette auf die Höhe der Stapelwechselvorrichtung bewegt. Die Stapelwechselvorrichtung fährt horizontal wieder in ihre Ausgangsposition zurück und lädt dadurch den sich bildenden Stapel auf die leere Palette ab. Die Palette bzw. der Stapelaufnahmetisch wird erneut kontinuierlich abgesenkt, bis die gewünschte Stapelhöhe erreicht ist und die Stapelwechselvorrichtung wieder zwischen zwei Bögen fährt, um die Stapel zu separieren.

Zu Beginn des kontinuierlichen Stapelvorgangs der vorstehend beschriebenen Art ergibt sich das Problem, dass der Stapelaufnahmetisch nicht bis auf die Höhe der Zuförderebene vertikal verfahren werden kann. Aus konstruktiven Gründen überragt der Zuförderer einen Teil des Aufnahmetisches. Die vertikal gesehen maximal höchste Position des Aufnahmetisches ist damit auf der Seite des Zuförderers durch die Unterseite der Stapelwechselvorrichtung, des Zuförderers oder anderer Bauteile beschränkt. Dies ist insbesondere der Fall, wenn die Bögen quer und horizontal zur Förderrichtung gesehen mittig auf der Palette gestapelt werden sollen. Dazu muss sich ein Teil der Palette unterhalb des Zuförderers befinden, die Palette kann daher nicht bis auf Höhe der Zuförderebene verfahren werden.

Bei der Bildung des ersten Stapels einer Produktionscharge (bestehend aus einer Vielzahl von Stapeln) kann die Palettenebene somit nicht wie erforderlich auf Höhe der Zuförderebene liegen, sondern darunter. Ein Hinabfallen der vorzugsweise geschuppt zugeförderten Bögen auf die Palette würde eine gleichmäßige Stapelung des ersten Stapels der Produktion verhindern. Die Bögen würden umknicken, sich verkanten und/oder gegeneinander verdrehen.

DE 30 28 865 A1 offenbart ein Verfahren zur Herstellung von Großstapeln aus großformatigen Bögen, wobei zur Überbrückung eines vertikalen Abstands zwischen einer Zuförderebene der Bögen und einer Flurebene eine Ablageplattform als ein vertikal auf- und abfahrbarer Stapelaufnahmetisch ausgeführt ist, wobei auf dem Stapelaufnahmetisch eine herkömmliche Palette platziert wird, auf welcher die Bögen zu Stapeln abgelegt werden, wobei der Aufnahmetisch mittels Hubeinrichtung in eine obere Endposition gefahren wird und die Bögen der Palette kontinuierlich zugeführt werden, wobei während der kontinuierlichen Zuführung der Stapelaufnahmetisch mit der Palette kontinuierlich abgesenkt wird, um eine gleichmäßige Stapelbildung zu gewährleisten, wobei dann, wenn die gewünschte Stapelhöhe erreicht ist, eine Stapelwechselvorrichtung eingeschoben wird, wobei der nachfolgende Stapel auf der Oberseite der Stapelwechselvorrichtung gebildet wird, wobei die Stapelwechselvorrichtung kontinuierlich abgesenkt wird, während der Aufnahmetisch in seine untere Endposition fährt und die Palette mit dem gebildeten Stapel wegtransportiert wird, wobei anschließend der Stapelaufnahmetisch mit einer neuen, leeren herkömmlichen Palette auf die Höhe der Stapelwechselvorrichtung bewegt wird und die Stapelwechselvorrichtung wieder in ihre Ausgangsposition zurück fährt und dadurch den sich bildenden Stapel auf die leere Palette ab lädt, wobei danach die Palette bzw. der Stapelaufnahmetisch erneut kontinuierlich abgesenkt wird, bis die gewünschte Stapelhöhe erreicht ist und die Stapelwechselvorrichtung wieder eingeschoben wird, wobei eine herkömmliche Palette zu Beginn der kontinuierlichen Stapelbildung eingesetzt wird.

Der Erfindung liegt daher die Aufgabe zugrunde, ein Verfahren anzugeben, das die eingangs geschilderten Nachteile behebt.

Diese Aufgabe ist durch die Merkmale des Patentanspruches 1 gelöst.

Erfindungsgemäß ist vorgesehen, eine Adapterpalette einmalig zu Beginn der kontinuierlichen Stapelbildung eingesetzt wird. Die erfindungsgemäße Adapterpalette ist eine effektive, konstruktiv einfach gehaltene und somit kostengünstige Lösung zur Beseitigung des eingangs dargestellten Problems.

Um also das genannte Problem zu lösen, sieht die Erfindung eine Adapterpalette vor, welche einmalig zu Beginn der kontinuierlichen Stapelbildung eingesetzt wird. Die Adapterpalette hat vorzugsweise die Maße 1200 x 800 x 300 mm (Länge x Breite x Höhe) und kann wie eine herkömmliche Euro-, Europool-, Europa- oder Systempalette gehandhabt werden.

Weitere vorteilhafte Verfahrensschritte sind in den Unteransprüchen angegeben und im folgenden anhand der Figuren, die den Verfahrensablauf zeigen, näher erläutert.

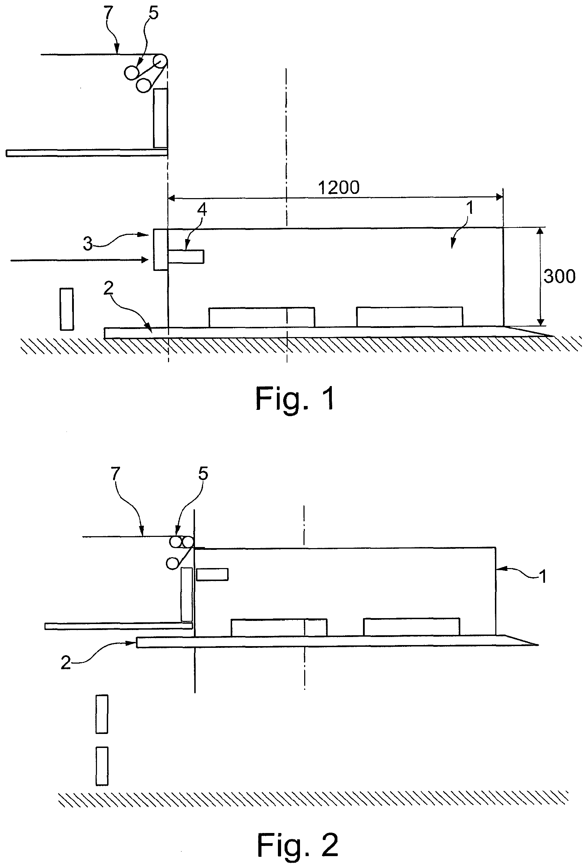

Die Adapterpalette (1) wird manuell, beispielsweise mit einem Handhubwagen, vor oder spätestens mit Start der Stapelproduktion auf dem Stapelaufnahmetisch (2) in Position gebracht. Zur korrekten Positionierung der Adapterpalette (1) auf dem Aufnahmetisch (2) sind Ausrichtvorrichtungen (3) vorgesehen, die horizontal in eine definierte Position gefahren werden können und an denen die Adapterpalette (1) anschlägt. Vorzugsweise wird die Adapterpalette (1) mit den Ausrichtvorrichtungen (3) so positioniert, dass die dem Zuförderer (7) zugewandte Seite der Palette (1) gerade nicht mehr vom Zuförderer (7) überragt wird. (Fig. 1)

Der Einsatz der Adapterpalette (1) wird mittels einem oder mehreren Sensoren (4) erkannt, angebracht beispielsweise unter anderem an der Adapterpalette (1).

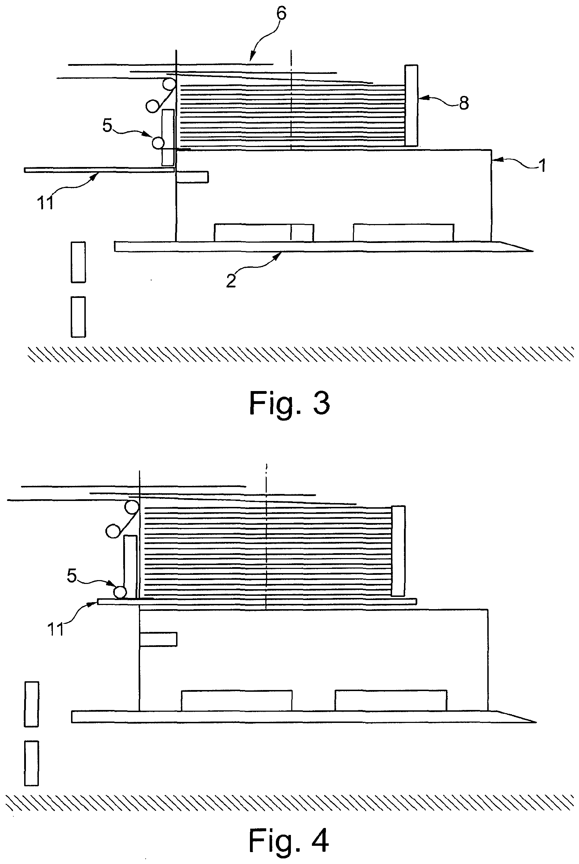

Ist die Adapterpalette (1) in Position, werden die Ausrichtvorrichtungen (3) wieder eingezogen und der Stapelaufnahmetisch (2) fährt in seine vertikal höchste Position. (Fig. 2) Wichtig ist, dass die Adapterpalette (1) deutlich höher konstruiert ist als herkömmliche Paletten, zum Beispiel Europaletten oder Europoolpaletten. Im Vergleich zu der bekannten Europoolpalette ist die Adapterpalette zumindest geringfügig höher, vorzugsweise mehr als doppelt so hoch. Befindet sich der Aufnahmetisch (2) in höchster Position, liegt die Oberfläche der Adapterpalette (1) erfindungsgemäß nahezu auf Höhe der Zuförderebene. In dieser Position fahren vom Zuförderer (7) aus seitlich ein oder mehrere Trennfinger (5) auf die Adapterpalette (1). Die Produktion startet und die Bögen (6) werden auf der Adapterpalette (1) abgestapelt. (Fig. 3) Auf der dem Zuförderer (7) zugewandten Seite liegt der Bogenstapel zumindest teilweise auf den Trennfingern (5) auf und wird dadurch zumindest teilweise von der Oberfläche der Adapterpalette (1) getrennt. Ungefähr eine Bogenlänge vom Zufördererende (7) entfernt ist eine ebenfalls vertikal verfahrbare Anschlagvorrichtung (8) vorgesehen, die verhindert, dass die Bögen (6) aufgrund der hohen Geschwindigkeit über die Palette (1) hinaus gefördert werden. Zur gleichmäßigen Stapelbildung werden der Aufnahmetisch (2) und die Anschlagvorrichtung (8) der Fördergeschwindigkeit entsprechend kontinuierlich abgesenkt. Mit gleicher Geschwindigkeit werden der oder die Trennfinger (5) vertikal nach unten bewegt. Haben der oder die Trennfinger (5) ihre untere Endposition erreicht (Fig. 4), wird die Stapelwechselvorrichtung (11) zwischen die von den Trennfingern (5) einseitig angehobenen Bögen und die Adapterpalette (1) gefahren. Der Bogenstapel liegt nun vollständig auf der Stapelwechselvorrichtung (11). Die Stapelwechselvorrichtung (11) wird in der Folge ebenfalls gleichmäßig abgesenkt, um bei kontinuierlicher Bogenzuförderung eine kontinuierliche Stapelbildung fortzusetzen. Zeitgleich oder zumindest kurz darauf fahren der oder die Trennfinger (5) wieder in ihre Ausgangsposition auf der Höhe der Zuförderebene zurück.

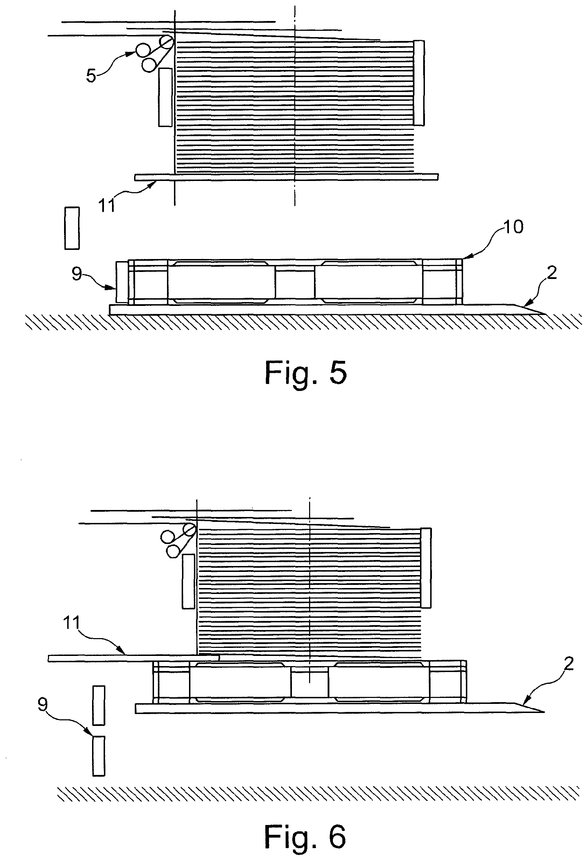

Die leere Adapterpalette (1) wird währenddessen bis auf Flurebene abgesenkt und durch eine herkömmliche Palette (10), beispielsweise eine Europoolpalette, ersetzt. (Fig. 5) Dazu sind eine oder mehrere weitere, verfahrbare Ausrichtvorrichtungen (9) vorgesehen, die in eine definierte Position gefahren werden, an die die herkömmliche Palette (10) anschlägt und die damit gewährleisten, dass die Palette (10) sich in der für die Stapelung korrekten Lage auf dem Stapelaufnahmetisch (2) befindet. Diese korrekte Lage kann beispielsweise quer und horizontal zur Förderrichtung gesehen mittig unter dem sich auf der Stapelwechseleinrichtung (11) befindlichen Stapel sein. Ist die Palette (10) in Position, fahren die Ausrichtvorrichtungen (9) analog zu den Ausrichtvorrichtungen (3) der Adapterpalette (1) in ihre Ausgangsposition zurück.

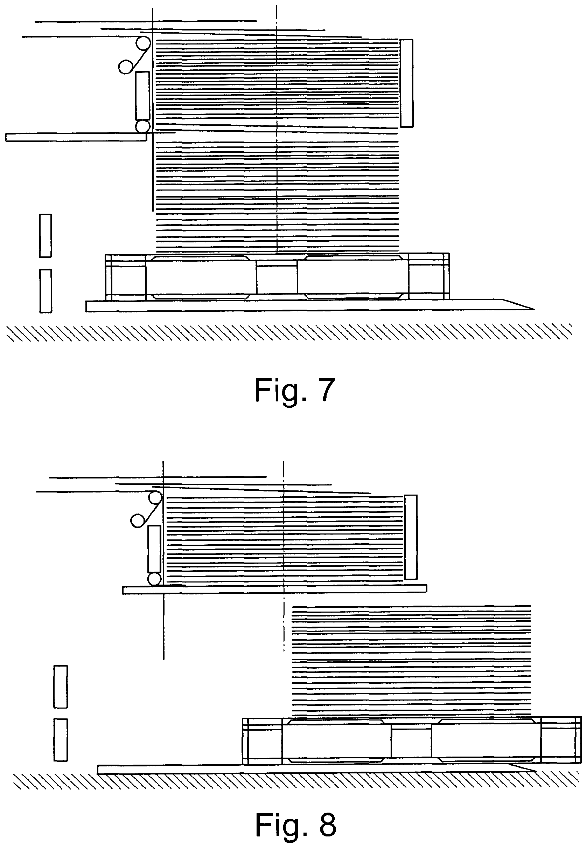

Anschließend fährt der Aufnahmetisch (2) mit der leeren Palette (10) auf die Höhe der Stapelwechselvorrichtung (11), die Stapelwechselvorrichtung (11) wird daraufhin horizontal in ihre Ausgangsposition bewegt und lässt dadurch den sich bildenden Stapel auf die leere Palette (10) ab. Die Lage des Stapels auf der Palette (10) ist abhängig von der Position der Palette (10). Vorzugsweise wurde die Position der Palette (10) zuvor mittels der Ausrichtvorrichtungen (9) so gewählt, dass der Stapel hinsichtlich der Aussparungen der Palette (10) für Flurfördergeräte mittig auf der Palette (10) liegt. Dann wird der Aufnahmetisch (2) kontinuierlich abgesenkt, während weitere Bögen (6) auf dem Stapel abgelegt werden. (Fig. 6) Um die gewünschte Stapelhöhe bzw. gewünschte Anzahl an Bögen pro Stapel zu erhalten, fahren der oder die Trennfinger (5) in ihrer vertikal höchsten Position zu einem definierten Zeitpunkt auf den in diesem Moment obersten Bogen des Stapels und trennen diesen zumindest teilweise vom direkt nachfolgenden Bogen. Der oder die Trennfinger (5) senken sich dann wieder mit gleicher Absenkgeschwindigkeit wie der Aufnahmetisch (2) bis in ihre Endposition auf die Höhe der Stapelwechselvorrichtung (11) ab und bilden für diese einen Spalt zwischen zwei Bögen, in den die Stapelwechselvorrichtung (11) einfahren und somit die zwei Stapel voneinander trennen kann. (Fig. 7) Während die weitere Stapelung aufgrund der kontinuierlichen Zuförderung wie schon im vorherigen Schritt auf der Stapelwechselvorrichtung (11) stattfindet, wird der Aufnahmetisch (2) mit dem auf der Palette (10) befindlichen Stapel bis auf Flurebene abgesenkt. Die Palette (10) mit Stapel wird gegen eine leere Palette eingetauscht und der Vorgang beginnt erneut. (Fig. 8)

Vorstehend beschrieben und in den Zeichnungen dargestellt ist lediglich die Variante, bei der eine eigenständige Adapterpalette bei der Bildung des ersten Stapels eingesetzt wird, dann auf Flurebene abgelassen und gegen eine herkömmliche Palette ausgetauscht wird. Denkbar ist aber auch, die Adapterpalette auf einer herkömmlichen Palette zu positionieren. Somit ist die herkömmliche Palette für die weiteren Produktionsschritte bereits in Position, d.h. die Adapterpalette wird nach ihrem Einsatz nur von dieser entfernt und die Stapelbildung kann fortgesetzt werden.

Die erfindungsgemäße Stapelproduktion beginnt immer mit dem Einsatz der erfindungsgemäßen Adapterpalette. Die Adapterpalette stellt von den Dimensionen her einen Bogenstapel mit einer Palette dar, um den problemlosen Start des kontinuierlichen Stapelprozesses zu ermöglichen. Die Größe und Position der Adapterpalette auf dem Aufnahmetisch ist vorzugsweise vom Format der Bögen unabhängig. Auch unterschiedliche Palettenformate, wie Europoolpaletten, Systempaletten, usw. können in Kombination mit der Adapterpalette verwendet werden.

Die erfindungsgemäße Adapterpalette ist eine effektive, konstruktiv einfach gehaltene und somit kostengünstige Lösung des eingangs dargestellten Problems.

## Patentansprüche

1. Verfahren zur Herstellung von Großstapeln aus großformatigen Bögen (6), wobei zur Überbrückung eines vertikalen Abstands zwischen einer Zuförderebene der Bögen (6) und einer Flurebene eine Ablageplattform als ein vertikal auf- und abfahrbarer Stapelaufnahmetisch (2) ausgeführt ist, wobei auf dem Stapelaufnahmetisch (2) eine herkömmliche Palette (10) platziert wird, auf welcher die Bögen (6) zu Stapeln abgelegt werden, wobei der Aufnahmetisch (2) mittels Hubeinrichtung in eine obere Endposition gefahren wird und die Bögen (6) der Palette (10) kontinuierlich zugeführt werden, wobei während der kontinuierlichen Zuführung der Stapelaufnahmetisch (2) mit der Palette (10) kontinuierlich abgesenkt wird, um eine gleichmäßige Stapelbildung zu gewährleisten, wobei dann, wenn die gewünschte Stapelhöhe erreicht ist, reine Stapelwechselvorrichtung (11) zwischen zwei Bögen (6) fährt und diese vollständig voneinander trennt, wobei der nachfolgende Stapel auf der Oberseite des als Einschubboden ausgebildeten Stapelaufnahmetisches (2) gebildet wird, wobei der Einschubboden kontinuierlich abgesenkt wird, während der Aufnahmetisch (2) in seine untere Endposition auf Höhe des Flurbereichs fährt und die Palette (10) mit dem gebildeten Stapel wegtransportiert wird, wobei anschließend der Stapelaufnahmetisch (2) mit einer neuen, leeren herkömmlichen Palette (10) auf die Höhe der Stapelwechselvorrichtung (11) bewegt wird und die Stapelwechselvorrichtung (11) horizontal wieder in ihre Ausgangsposition zurück fährt und dadurch den sich bildenden Stapel auf die leere Palette (10) ab lädt, wobei danach die Palette (10) bzw. der Stapelaufnahmetisch (2) erneut kontinuierlich abgesenkt wird, bis die gewünschte Stapelhöhe erreicht ist und die Stapelwechselvorrichtung (11) wieder zwischen zwei Bögen (6) fährt, um die Stapel zu separieren, **dadurch gekennzeichnet, dass** eine deutlich höher als herkömmliche Paletten konstruierte Adapterpalette (1) einmalig zu Beginn der kontinuierlichen Stapelbildung eingesetzt wird.

2. Verfahren nach Anspruch 1, **dadurch gekennzeichnet, dass** die Adapterpalette (1) manuell, beispielsweise mit einem Handhubwagen, vor oder spätestens mit Start der Stapelproduktion auf dem Stapelaufnahmetisch (2) in Position gebracht wird.

3. Verfahren nach Anspruch 1 oder 2, **dadurch gekennzeichnet, dass** zur korrekten Positionierung der Adapterpalette (1) auf dem Aufnahmetisch (2) Ausrichtvorrichtungen (3) horizontal in eine definierte Position gefahren werden und an denen die Adapterpalette (1) anschlägt.

4. Verfahren nach Anspruch 3, **dadurch gekennzeichnet, dass** die Adapterpalette (1) mit den Ausrichtvorrichtungen (3) so positioniert wird, dass die dem Zuförderer (7) zugewandte Seite der Palette (1) gerade nicht mehr vom Zuförderer (7) überragt wird.

5. Verfahren nach einem der vorhergehenden Ansprüche, **dadurch gekennzeichnet, dass** der Einsatz der Adapterpalette (1) mittels einem oder mehreren Sensoren (4) erkannt wird.

6. Verfahren nach Anspruch 3 oder 4, **dadurch gekennzeichnet, dass** dann, wenn die Adapterpalette (1) in Position ist, die Ausrichtvorrichtungen (3) wieder eingezogen werden und der Stapelaufnahmetisch (2) fährt in seine vertikal höchste Position.

7. Verfahren nach einem der vorhergehenden Ansprüche, **dadurch gekennzeichnet, dass,** wenn sich der Aufnahmetisch (2) in höchster Position befindet, die Oberfläche der Adapterpalette (1) nahezu auf Höhe der Zuförderebene aufliegt, wobei in dieser Position vom Zuförderer (7) seitlich ein oder mehrere Trennfinger (5) ausfahren auf die Adapterpalette (1) und die Produktion startet und die Bögen (6) auf der Adapterpalette (1) abgestapelt werden.

8. Verfahren nach Anspruch 7, **dadurch gekennzeichnet, dass** zur gleichmäßigen Stapelbildung der Aufnahmetisch (2) und die Anschlagvorrichtung (8) der Fördergeschwindigkeit entsprechend kontinuierlich abgesenkt werden, wobei mit gleicher Geschwindigkeit der oder die Trennfinger (5) vertikal nach unten bewegt werden.

9. Verfahren nach Anspruch 7 oder 8, **dadurch gekennzeichnet, dass** dann, wenn der oder die Trennfinger (5) ihre untere Endposition erreicht haben, die Stapelwechselvorrichtung (11) zwischen die von den Trennfingern (5) einseitig angehobenen Bögen und die Adapterpalette (1) gefahren werden, wodurch der Bogenstapel vollständig auf der Stapelwechselvorrichtung (11) liegt und die Stapelwechselvorrichtung (11) in der Folge ebenfalls gleichmäßig abgesenkt wird, um bei kontinuierlicher Bogenzuförderung eine kontinuierliche Stapelbildung fortzusetzen.

10. Verfahren nach einem der vorhergehenden Ansprüche, **dadurch gekennzeichnet, dass** die leere Adapterpalette (1) bis auf Flurebene abgesenkt und durch eine herkömmliche Palette (10) ersetzt wird und anschließend der Aufnahmetisch (2) mit der leeren Palette (10) auf die Höhe der Stapelwechselvorrichtung (11) fährt, wobei die Stapelwechselvorrichtung (11) daraufhin horizontal in ihre Ausgangsposition bewegt wird und dadurch den sich bildenden Stapel auf die leere Palette (10) ablässt.

## Claims

1. A method for the production of large stacks of large-format sheets (6), wherein, for bridging a vertical distance between a feed plane of the sheets (6) and a floor level, a storage platform is designed as a stack receiving table (2) that can be vertically extended and retracted, wherein on the stack receiving table (2) a conventional pallet (10) is placed, on which the sheets (6) are deposited into stacks, wherein the receiving table (2) is driven by means of a lifting device into an upper end position and the sheets (6) are fed continuously to the pallet (10), wherein during the continuous feeding the stack receiving table (2) is lowered continuously with the pallet (10) to ensure uniform stacking, and when the desired stack height is reached, a stack change device (11) travels between two sheets (6) and completely separates these from each other, the subsequent stack being formed on the top of the stack receiving table (2) which is designed as an insert shelf, wherein the insert shelf is lowered continuously while the receiving table (2) moves into its lower end position at the level of the floor area and the pallet (10) with the formed stack is transported away, wherein the stack receiving table (2) is then moved to the level of the stack changing device (11) with a new, empty conventional pallet (10) and the stack changing device (11) moves horizontally back to its original position, thereby unloading the stack being formed onto the empty pallet (10), after which the pallet (10) or the stack receiving table (2) is lowered again continuously until the desired stack height is reached and the stack changing device (11) again moves between two sheets (6) to separate the stacks, **characterised in that** an adapter pallet (1) designed to be much higher than conventional pallets is inserted once at the beginning of the continuous stack formation.

2. The method according to claim 1, **characterised in that** the adapter pallet (1) is manually moved into position on the stack receiving table (2), for example with a manual pallet truck, before or no later than at the start of the stack production.

3. The method according to claim 1 or 2, **characterised in that** for the correct positioning of the adapter pallet (1) on the receiving table (2) alignment devices (3) are moved horizontally into a defined position where the adapter pallet (1) abuts against them.

4. The method according to claim 3, **characterised in that** the adapter pallet (1) with the alignment devices (3) is positioned so that the side of the pallet (1) facing the feed conveyor (7) is no longer protruded beyond by the feed conveyor (7).

5. The method according to one of the preceding claims, **characterised in that** the insertion of the adapter pallet (1) is detected by means of one or a plurality of sensors (4).

6. The method according to claim 3 or 4, **characterised in that,** when the adapter pallet (1) is in position, the alignment devices (3) are retracted again and the stack receiving table (2) moves into its highest vertical position.

7. The method according to one of the preceding claims, **characterised in that,** when the receiving table (2) is in the highest position, the surface of the adapter pallet (1) rests almost at the level of the feed plane, wherein in this position one or a plurality of separating fingers (5) extend laterally from the feed conveyor (7) onto the adapter pallet (1) and production starts and the sheets (6) are stacked on the adapter pallet (1).

8. The method according to claim 7, **characterised in that,** for uniform stacking, the receiving table (2) and the stop device (8) are lowered continuously according to the conveying speed, while the one or a plurality of separating fingers (5) are moved vertically downwards at the same speed.

9. The method according to claim 7 or 8, **characterised in that,** when the one or a plurality of separating fingers (5) have reached their lower end position, the stack change device (11) is moved between the sheets unilaterally raised by the separating fingers (5) and the adapter pallet (1), whereby the stack of sheets rests completely on the stack changing device (11) and the stack changing device (11) is then likewise evenly lowered, in order to continue continuous stacking with continuous sheet conveying.

10. The method according to one of the preceding claims, **characterised in that** the empty adapter pallet (1) is lowered down to the floor level and replaced by a conventional pallet (10) and then the receiving table (2) with the empty pallet (10) moves up to the height of the stack change device (11), wherein the stack changing device (11) is then moved horizontally into its original position, thereby discharging the stack being formed onto the empty pallet (10).

## Revendications

1. Procédé de production de piles grandes de feuilles grand format (6), pour couvrir une distance verticale entre un plan d'amenée des feuilles (6) et un plan de sol, une plateforme de dépose étant réalisée sous la forme d'une table de réception de pile (2) mobile verticalement de haut en bas, sur la table de réception de pile (2), on place une palette (10) sur laquelle les feuilles (6) sont déposées pour former des piles, la table de réception de pile (2) étant déplacée au moyen d'un dispositif de levage dans une position finale supérieure et les feuilles (6) de la palette (10) étant acheminées en continu, pendant l'acheminement continu, la table de réception de pile (2), ensemble avec la palette (10), étant abaissée en continu pour assurer un empilement uniforme, ensuite lorsque la hauteur d'empilement souhaitée est atteinte, un dispositif de changement de pile (11) se déplace entre deux feuilles (6) et les sépare complètement l'une de l'autre, la pile suivante étant formée sur la face supérieure de la table de réception de pile (2) formée comme un fond d'introduction, le fond d'introduction étant abaissé en continu, tandis que la table de réception (2) se déplace dans sa position finale inférieure à la hauteur de la zone de sol et que le transport de la palette (10) avec la pile formée se poursuit, ensuite la table de réception de pile (2) avec une nouvelle palette vide (10) étant déplacée à la hauteur du dispositif de changement de pile (11) et le dispositif de changement de pile (11) revenant horizontalement dans sa position initiale et ainsi la pile se formant sur la palette vide (10) étant déchargé, après quoi la palette (10) ou la table de réception d'empilement (2) étant de nouveau abaissée en continu jusqu'à ce que la hauteur de pile souhaitée soit atteinte et que le dispositif de changement de pile (11) se déplace à nouveau entre deux feuilles (6) pour séparer la pile, **caractérisé en ce qu'**une palette d'adaptation (1) construite bien plus haute qu'une palette classique est utilisée uniquement au début de la formation continue de la pile.

2. Procédé selon la revendication 1, **caractérisé en ce que** la palette d'adaptation (1) est mise en place manuellement, par exemple avec un transpalette à main, avant ou au plus tard au début de la formation de pile sur la table de réception de pile (2).

3. Procédé selon la revendication 1 ou 2, **caractérisé en ce que** pour le positionnement correct de la palette d'adaptation (1) sur la table de réception (2), des dispositifs d'alignement (3) sont déplacés horizontalement dans une position définie et contre lesquels la palette d'adaptation (1) est en butée.

4. Procédé selon la revendication 3, **caractérisé en ce que** la palette d'adaptation (1) avec les dispositifs d'alignement (3) est positionnée de sorte que le côté de la palette (1) faisant face au dispositif d'amenée (7) soit au niveau du convoyeur d'amenée (7).

5. Procédé selon l'une des revendications précédentes, **caractérisé en ce que** l'utilisation de la palette d'adaptation (1) est détectée au moyen d'un ou plusieurs capteurs (4).

6. Procédé selon la revendication 3 ou 4, **caractérisé en ce que,** lorsque la palette d'adaptation (1) est en position, les dispositifs d'alignement (3) sont rétractés et la table de réception de pile (2) se déplace dans sa position verticale la plus haute.

7. Procédé selon l'une des revendications précédentes, **caractérisé en ce que,** lorsque la table de réception (2) est dans la position la plus haute, la surface de la palette d'adaptation (1) repose presque à la hauteur du plan du dispositif d'amenée, dans lequel, en cette position du convoyeur d'amenée (7), un ou plusieurs doigts de séparation (5) s'étendent latéralement sur la palette d'adaptation (1) et la production commence et les feuilles (6) sont empilées sur la palette d'adaptation (1).

8. Procédé selon la revendication 7, **caractérisé en ce que** pour un empilement uniforme, la vitesse de transport de la table de réception (2) et du dispositif de butée (8) est abaissée en continu, le ou les doigts de séparation (5) étant déplacés verticalement vers le bas à la même vitesse.

9. Procédé selon la revendication 7 ou 8, **caractérisé en ce que,** lorsque le ou les doigts de séparation (5) ont atteint leur position finale inférieure, le dispositif de changement de pile (11) est déplacé entre les feuilles soulevées par le doigt de séparation (5) d'un côté et la palette d'adaptation (1), de sorte que la pile de feuilles repose complètement sur le dispositif de changement de pile (11) et que le dispositif de changement de pile (11) soit également abaissé de manière uniforme par la suite, afin de continuer à empiler en continu dans le cas d'un transport de feuille en continu.

10. Procédé selon l'une des revendications précédentes, **caractérisé en ce que** la palette d'adaptation vide (1) est abaissée jusqu'au niveau du sol et remplacée par une palette conventionnelle (10), puis la table de réception (2) se déplace avec la palette vide (10) à la hauteur du dispositif de changement de pile (11), le dispositif de changement de pile (11) étant ensuite déplacé horizontalement vers sa position de départ, déchargeant ainsi la pile se formant sur la palette vide (10).
